# EUROPEAN PATENT SPECIFICATION

(11) **EP 0 454 685 B1**
(45) Date of publication and mention of the grant of the patent: **01.05.1996**
(21) Application number: 89913272.4
(22) Date of filing: 27.10.1989
(51) Int. Cl.: G11B 19/20, H02K 5/173, H02K 21/22, H02K 29/00, H02K 7/00, H02K 21/12, H02K 1/22, G11B 5/016

(54) **UNDER-THE-HUB DISK DRIVE SPIN MOTOR**
UNTER-DER-NABE-SPINNMOTOR FÜR PLATTENEINHEIT
MOTEUR DE ROTATION POUR UNITE DE DISQUES SOUS LE MOYEU

(30) Priority: 25.01.1989 US 301797
(43) Date of publication of application: 06.11.1991
(73) Proprietor: Conner Peripherals, Inc., San José California 95131 (US)
(72) Inventor: STEFANSKY, Frederick, Mark, Longmont, CO 80501 (US); DUNKLEY, James, Boulder, CO 80303 (US)
(74) Representative: Wright, Hugh Ronald
(86) International application number: US8904838
(87) International publication number: WO9009051

(56) References cited:
- US-A- 4 519 010
- US-A- 4 599 664
- US-A- 4 604 665
- US-A- 4 647 803
- US-A- 4 658 312
- US-A- 4 739 203
- US-A- 4 760 298
- US-A- 4 763 053

## Description

### CROSS-REFERENCE TO RELATED APPLICATION

METHOD AND APPARATUS FOR BRUSHLESS DC MOTOR SPEED CONTROL, Serial No. 163,222, filed February 26, 1988, inventors Squires, et al., assigned to the assignee of the subject Application.

### BACKGROUND OF THE INVENTION

### Field of the Invention

The present invention relates to spin motors for disk drives; more particularly to low power and low height spin motors.

### Description of the Related Art

In disk drives or (disk files) for data storage, the disks are rotated so that a transducer which is constrained to move essentially along the radius of the disk can access data at any point on each of the concentric tracks on the disk. In early disk drives, a belt connected the motor to a spindle on which the disks were mounted. Later, spin motors were integrated with the rotating shaft of the disk drive. In a rotating shaft motor, the shaft is supported by bearings mounted to the structural elements of the disk drive and the hub is fixed to the shaft (see, e.g., U.S. Patent Nos. 4,672,487; 4,692,827; 4,703,374; and 4,739,425).

As spin motors were reduced in size, it became possible to build the spin motor into the hub. In-hub spin motors in which the stator and motor are contained within the hub are disclosed in, for example, U.S. Patents Nos. 4,739,425 and 4,743,995. Since spin motors for disk drives are conventionally brushless motors, the armature of the motor is referred to as the stator and the magnets are referred to as the rotor. However, in a spin motor where the armature rotates and brushes are used to contact the armature, the armature would be termed the rotor and the magnets would be termed the stator. The diameter of the rotor and stator in an in-hub motor are limited by the inner diameter of the hub which is, in turn, controlled by the inner diameter of the disk or disks mounted on the hub.

The torque created by a motor is related to the product of the radius of the gap between the stator and rotor, the strength of the magnetic field created by the permanent magnets, and the length of the wire in the armature windings in the magnetic field. The torque is also related to the current in the armature windings; torque can be expressed as volts per radian per second, and volts can be expressed in terms of current.

In an in-hub spin motor the radius of the gap is limited by the inner diameter of the hub, and the strength of the magnetic field is limited by the characteristics of the permanent magnets. Thus, assuming a fixed magnetic field strength, increasing the torque provided by an in-hub motor, without increasing the current supplied to the motor, requires increasing the length of the armature windings in the magnetic field. The length of the armature windings in the magnetic field can be increased either by providing more windings on the stator or increasing the height of the stator lamination.

In-hub motors are well suited to multiple-disk disk drives where the height of the hub is relatively large. However, in low height disk drives, particularly disk drives intended for use in portable and/or lap-top computers, the height of the disk drive is a critical factor and in-hub motors have not been designed which meet the torque and overall height requirements, In particular, a disk drive having an overall height of approximately 25.4mm (one inch) or less must utilize a spin motor having a height of less than 25.4mm (one inch) which creates the torque necessary to provide stable operating speeds and avoids unnecessary spindowns. It has been difficult to construct motors meeting these requirements using an in-hub design.

US Patent Publication 4,760,298 discloses a hub motor for rotating a magnetic disk comprising an armature concentrically secured to a shaft affixed to a mounting frame. A rotor frame having a cylindrical side wall is rotatably supported in a cantilever fashion on a free end of the Center shaft by a pair of bearings encircling the outer peripheral surface of the armature and a magnetic disk support that projects from the side wall. A permanent magnet secured inside the side wall is disposed to interact with magnetic fields produced by the armature. The diameter of the gap between the rotor and the stator is smaller than the inside diameter of the disk to be rotated. Furthermore, the total height of the disk motor is more than the combined height of the bearings and the rotor/stator portion.

US Patent Publication 4,658,312 discloses an under-the-hub motor for rotating a disk in a disk drive. The disk drive is provided with a outer rotor type driving motor having a rotor casing mounted by means of a shaft in a bearing storage so as to rotate relative to a stator and receive the storage disk. The stator includes magnetically active parts. At least that part of the rotor casing receiving the storage disk is made from a non-ferromagnetic material and carries the shaft either directly or by means of a hub. The outer diameter of the rotor casing is smaller than the central opening of the storage disk.

US Patent Publication 4,763,053 discloses an under-the-hub spin motor for rotating a disk in a disk drive. It comprises a hub rotatably positioned around a central shaft, said hub including a magnetic rotor part rotating concentrically inside a stator part.

It is clear from the drawings of the three specifications above that the center of mass of the rotating parts are not equidistant between upper and lower bearings.

### SUMMARY OF THE INVENTION

It is, therefore, an object of the present invention to provide a low height spin motor for a disk drive which creates torque sufficient to provide stable operating speeds.

A further object of the present invention is to provide a low height spin motor in which the stator and the rotor are outside of the hub so that the radius of the stator/rotor gap may be greater than the inside diameter of the disk or disks.

Another object of the present invention is to provide an under-the-hub spin motor in which the bearings are adjacent to one another and the stator and rotor are cantilevered with respect to the positions of the bearings along the axis of the shaft.

Another object of the present invention is to provide an under-the-hub spin motor in which the center of mass of the rotating elements of the disk drive along the axis of the shaft is centered between the positions of the bearings.

Another object of the present invention is to provide an under-the-hub disk drive in which the shaft is directly mounted to the base of a disk drive, thereby eliminating the interface between a flange and the base plate.

Another object of the present invention is to provide a spin motor having sufficient space inside the spin motor to provide a large number of turns of large diameter wire on the armature windings.

Another object of the present invention is to provide a low power spin motor which operates at 5 volts to eliminate the need for an additional 12-volt power supply in a computer - the electronics operate from a 5-volt power supply.

A spin motor assembly for rotating a disk in a disk drive including a base plate and said disk, the disk having a mounting hole having a first diameter, comprising:
a shaft having a first and second portions and an axis, said first portion of said shaft being mounted directly to the base plate;
first and second bearings provided at respective first and second positions on said second portion of said shaft;
a hub, rotatably supported on said shaft by said first and second bearings; said hub having a cylindrical bearing contact surface having a second diameter and a disk support surface which is substantially perpendicular to the axis of said shaft for supporting the disk;
a stator provided on the base plate, said stator including a lamination having a third diameter greater than the second diameter;
a rotor mounted on said hub; and
the center of mass of the rotating elements being positioned at a point on the axis of said shaft equidistant from the positions of said first and second bearings.

### BRIEF DESCRIPTION OF THE DRAWINGS

Fig. 1 is a sectional view of an under-the-hub disk drive motor in accordance with the first embodiment of the present invention;
Fig. 2 is an exploded view of the under-the-hub disk drive motor in accordance with the first embodiment of the present invention;
Fig. 3 is a sectional view of an under-the-hub disk drive motor in accordance with the second embodiment of the present invention; and
Fig. 4 is an exploded view of an under-the-hub disk drive motor in accordance with the second embodiment of the present invention.

### DESCRIPTION OF THE PREFERRED EMBODIMENTS

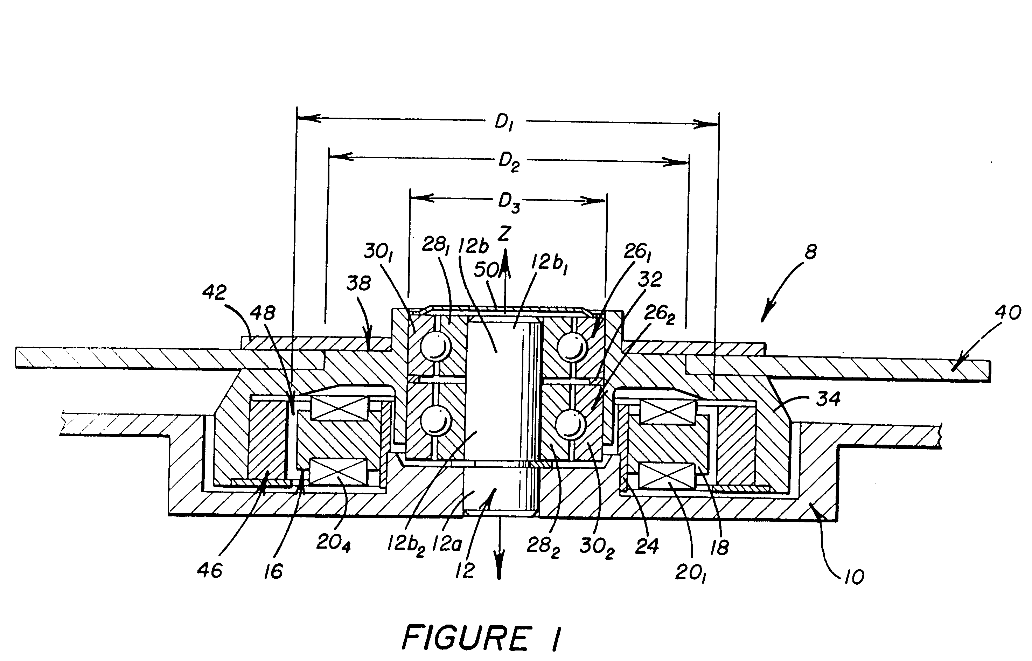

Under-the-hub spin motors in accordance with the first and second embodiments of the present invention will be described will reference to Figures 1-4. Spin motors in accordance with the present invention may be brushless DC motors operated in accordance with the method disclosed in co-pending application Serial No. 163,222, which is hereby incorporated by reference. However, the principles of the present invention are applicable to motors utilizing brushes--although such motors are usually not desirable in disk drives--and to rotors in which either the armature or magnets rotate.

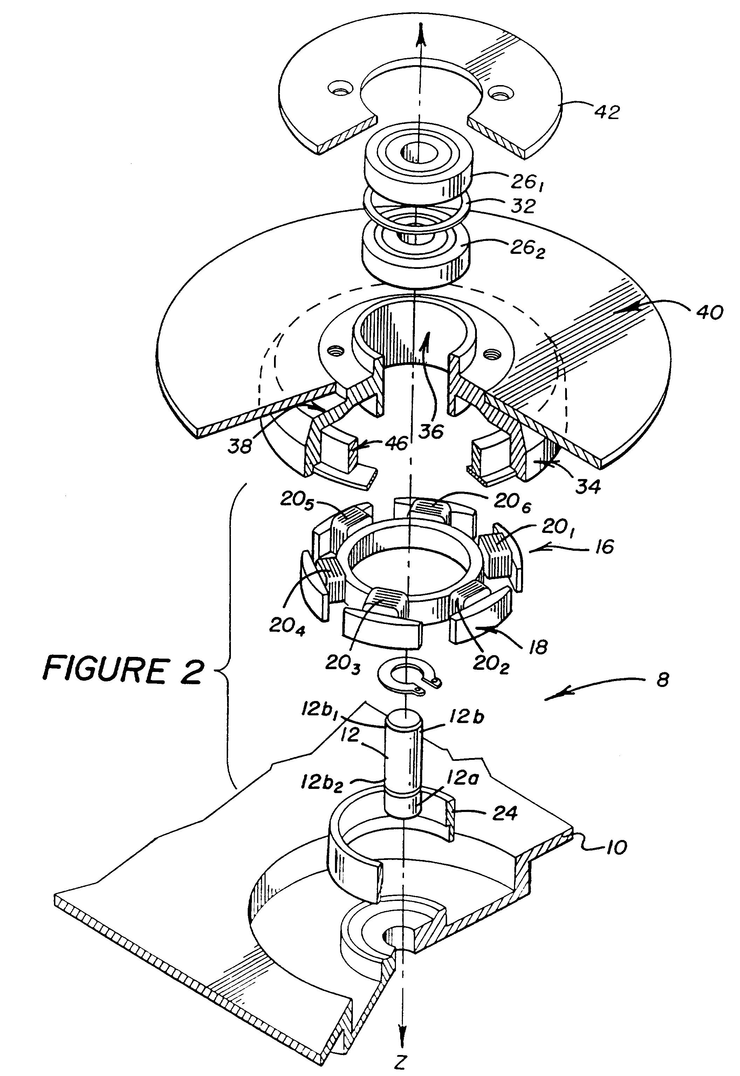

An under-the-hub spin motor 8 in accordance with the first embodiment of the present invention is illustrated in and will be described with reference to Figs. 1 and 2. The spin motor 8 of the first embodiment of the present invention is a stationary shaft motor in which a flange 10 rigidly supports motor shaft 12. Spin motor 8 is attached to a disk drive by mounting flange 10 on the base plate (not shown) of the disk drive. A stator assembly 16, including a stator lamination 18 and a plurality of coils 20₁₋₆ provided on stator lamination 18, is mounted on a collar 24 provided on flange 10. Flange 10, shaft 12, and stator 16 comprise the stationary portion of spin motor 8.

Shaft 12 has a first portion 12a which mates with flange 10 and a second portion 12b. First and second bearings 26₁₋₂ are respectively provided on first and second ends 12b₁, 12b₂ of the second portion of 12b of shaft 12. The inner races 28₁₋₂ of bearings 26₁₋₂ are glued to the second portion 12b of shaft 12 in a preloading process described below. Outer races 30₁₋₂ of bearings 26₁₋₂ are separated by a spacer 32.

Hub 34 has an inner bearing surface 36 which mates with outer races 30₁₋₂ so that hub 34 is supported by and rotates on bearings 26₁₋₂. A disk support surface 38 provided on hub 34 is oriented so that the axis Z of shaft 12 is normal to the plane of disk support surface 38. Disk 40 rests on disk support surface 38 and is held in place by a retainer 42 which is attached to hub 34 by, for example, screws (not shown).

A rotor 46, comprising a multi-pole magnetic ring, is mounted on hub 34 so that rotor 46 is concentric with stator 16 and defines a gap 48 between stator 16 and rotor 46. Gap 48 has a diameter D₁ which is greater than the inside diameter D₂ of disk 40. Diameter D₂ is, in turn, greater than the diameter of D₃ of inner bearing surface 36 of hub 34.

The under-the-hub design and the overlap of stator 16 and second bearing 26₂, provides spin motor 8 with an overall height along axis Z which is less than the total height of bearings 26₁₋₂ and stator 16. The overlap and concentric relationship of stator 16 and second bearing 26₂ aids in reducing the height of motor 8.

The center of mass of the rotating elements is positioned at a point on the axis of said shaft (12) equidistant from the positions of the first and second bearings (26).

Spin motor 8 is not hermetically sealed, although spin motors having a hermetic seal could be fabricated in accordance with the present invention, and relies on a cap 50 to control the flow of air through the motor. Without such a cap, spin motor 8 would pump air through the motor, enhancing the possibility that contaminants from the motor would enter the controlled environment within the disk drive. To reduce the likelihood of contamination, bearings 26₁₋₂ are sealed bearings and labyrinth is formed between second bearing 26₂ and the disk drive environment - the labyrinth has a path weaving around stator 16 and rotor 46.

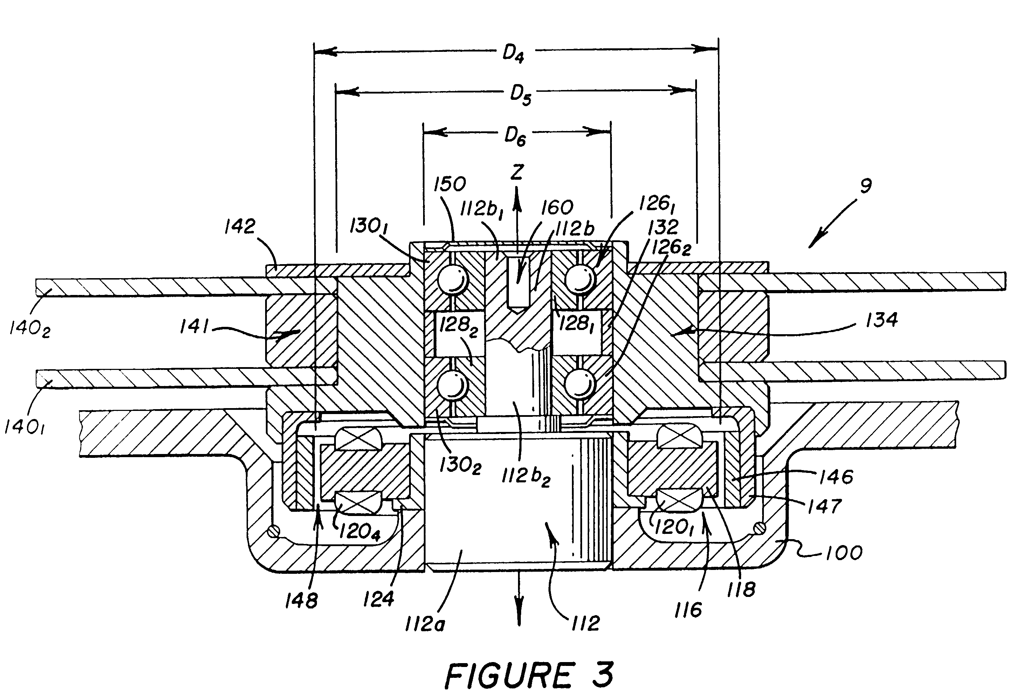

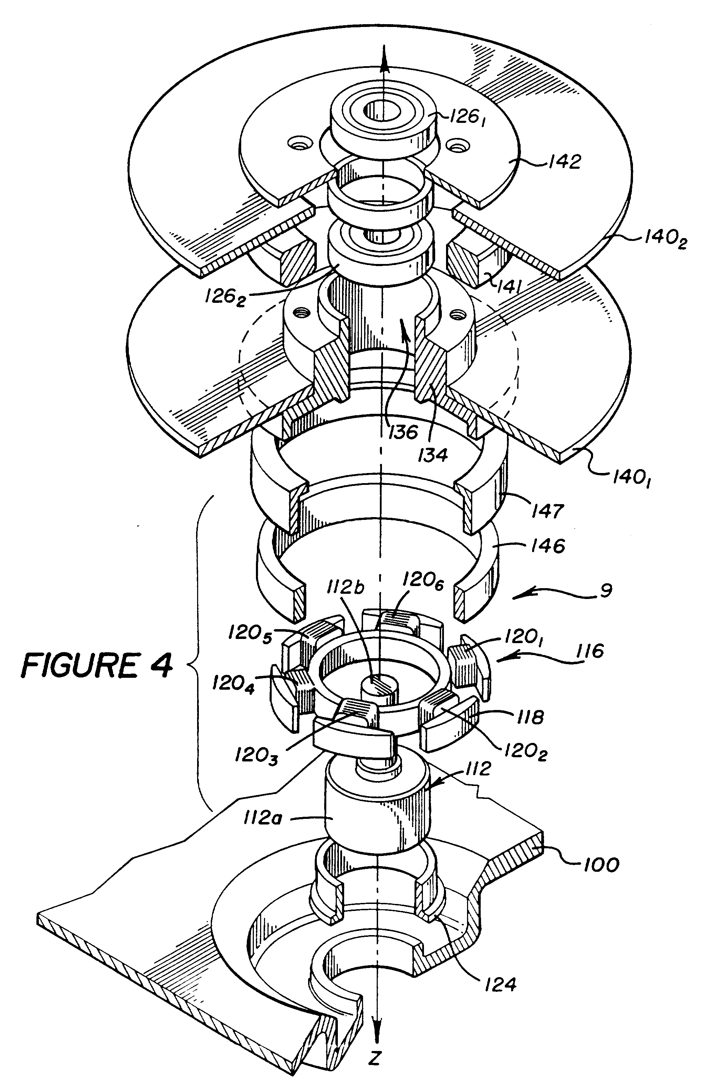

An under-the-hub spin motor 9 in accordance with the second embodiment of the present invention is illustrated in Figs. 3 and 4. The spin motor of the second embodiment of the spin motor is also a stationary shaft motor. Spin motor 9 is attached to a disk drive by directly mounting a first portion 112a of shaft 112 to base plate 100 of the disk drive. To provide greater stability, first portion 112a of shaft 112 has a larger diameter than second portion 112b of shaft 112. The direct mounting of shaft 112 to the base plate eliminates one interface; whereas the first embodiment of the present invention has two interfaces (an interface between shaft 12 and flange 10 and an interface between flange 10 and the base plate) the second embodiment has only a single interface (the interface between shaft 112 and the base plate. Further, the direct mounting allows base plate 100 to act as a heat sink for spin motor 9.

A stator assembly 116, including a stator lamination 118 and a plurality of coils 120₁₋₆ provided on stator lamination 118, is mounted on a collar 124 which surrounds a first portion 112a of shaft 112 and abuts base plate 100. In a spin motor 9 the use of two disks 140₁₋₂ does not allow for an overlap of stator 116 and second bearing 126₂. Shaft 112, and stator 116 comprise the stationary portion of spin motor 9.

First and second bearings 126₁₋₂ are respectively provided on first and second ends 112b₁, 112b₂ of the second portion of 112b of shaft 112. The inner races 128₁₋₂ of bearings 126₁₋₂ are glued to the shaft 112 in a preloading process described below. Outer races 130₁₋₂ of bearings 126₁₋₂, which are separated by a spacer 132, support a hub 134 by contacting inner bearing surface 136 of hub 134.

The rotating elements of motor 9 comprise a hub assembly based on hub 34. Hub 134 has a disk support surface 138 which supports disk 140₁, a second disk 140₂ is separated from first disk 140₁ by a spacer 141. As in the first embodiment, disk support surface 138 is oriented so that the axis Z of shaft 112 is normal to the plane of disk support surface 138. Disks 140₁₋₂ are retained by retainer 142 attached to hub 134 by, for example screws (not shown).

Hub 134 is formed of aluminum to match the thermal expansion coefficients of thermal expansion of hub 134 and disks 141₁₋₂. Differences in these coefficients could cause the disks 140₁₋₂ to change position relative to hub 134 as the disks and the hub undergo thermal cycles. Further, in an aluminum hub 134 a bearing sleeve may be provided as an integral portion of hub 134, whereas a steel hub would require a bearing sleeve press-fit into the hub.

A rotor 146, comprising a multi-pole magnetic ring, is mounted on hub 134 by rotor collar 147. Rotor 146 is concentric with stator 116 and defines a gap 148 between stator 116 and rotor 146. As in the first embodiment, gap 148 has a diameter D4 which is greater than the inside diameter D₅ of disks 140₁₋₂, and diameter D₅ is, in turn, greater than the diameter D₆ of inner bearing surface 136 of hub 134.

A cap 150 attached to hub 134 and a labyrinth, similar to that of motor 8 of the first embodiment, prevent air from freely flowing through motor 9.

The center of mass of the rotating elements is positioned at a point on the axis of said shaft (112) equidistant from the positions of the first and second bearings (126).

The under-the-hub design of motors 8,9 provides a large gap diameter D₄, and thus a large gap radius D₄/2, which causes under-the-hub spin motors 8,9 to generate more torque than in-hub motors having the same number of turns in windings 20₁₋₂ 120₁₋₆ and magnets providing the same field strength as magnets 46, 146 in rotors 46, 146, and using the same operating current as motors 8, 9. Further, since the torque produced by spin motors 8, 9 is also related to the current in windings 20₁₋₆, 120₁₋₆ spin motors 8, 9 can produce the same amount of torque as an in-hub motor having the same size windings and the same type magnet using a smaller current. The reduction in the current is important in reducing the heat produced by the motor and reducing the power required by the spin motor, and thus the overall power required by the disk drive incorporating spin motor 8 or 9.

The under-the-hub design also provides space inside the motor for a larger number of turns in each of windings 20₁₋₆, 120₁₋₆ allowing the use of larger diameter wire in windings 20₁₋₆, 120₁₋₆. A large number of turns is desired in order to generate the highest possible back EMF, and larger wire reduces the resistance in windings 20₁₋₆, 120₁₋₆ , allowing the motors 8, 9 to operate at a lower voltage, for example 5 volts as opposed to the conventional operating voltage of 12 volts. For example, spin motor 9 has 70 turns of 36 gauge (.0056" diameter) wire per winding 120₁₋₆. Operated at 12 volts and 3600 rpm this motor produces a back EMF of 9 volts.

Preloading bearings 26₁₋₂ and 126₁₋₂ is performed by placing the bearings on the shaft with the appropriate spacing between outer races 30₁₋₂, 130₁₋₂, and then using a mechanical device to force the inner races 28₁₋₂, 128₁₋₂ towards one another with a carefully calibrated and constant force and maintaining this force while an adhesive used to attach bearings to the shaft cures. In spin motor 9, a threaded hole 160 is provided at the first end 112b₁ of first portion 112b of shaft 112 so that a preloading tool may be attached shaft 112.

The many features and advantages of the spin motors of the first and second embodiments of the present invention will be apparent to those skilled in the art from the DESCRIPTION OF THE PREFERRED EMBODIMENTS.

Modifications are possible within the scope of the appended claims.

## Claims

1. A spin motor assembly (9) for rotating a disk (40) in a disk drive including a base plate (100) and said disk, the disk having a mounting hole having a first diameter (D5), comprising:
a shaft (112) having a first (112a) and second (112b) portions and an axis, said first portion (112a) of said shaft being mounted directly to the base plate (100);
first and second bearings (126) provided at respective first and second positions on said second portion (112b) of said shaft;
a hub (134), rotatably supported on said shaft (112) by said first and second bearings (126); said hub having a cylindrical bearing contact surface having a second diameter (D3,D6) and a disk support surface which is substantially perpendicular to the axis of said shaft (112) for supporting the disk;
a stator (116) provided on the base plate (100), said stator including a lamination having a third diameter (D4) greater than the second diameter (D6);
a rotor mounted on said hub; and
the center of mass of the rotating elements being positioned at a point on the axis of said shaft (112) equidistant from the positions of said first and second bearings (126).

2. A spin motor assembly (9) according to Claim 1, wherein said rotor (146) is cantilevered with respect to said first and second bearings.

3. A spin motor assembly (9) according to Claims 1 or 2, wherein said first and second bearings (126) are provided at respective, adjacent first and second positions.

4. An spin motor assembly (9) according to Claim 1, 2 or 3, wherein:
said shaft (12) has an axis; and
said stator (16) is positioned at a point along the axis of the shaft (12) outside of the axial region between the positions of said first and second bearings (26).

5. A spin motor assembly according to any one of Claims 1 to 4 wherein said rotor (46) is mounted on said hub (34) so that said rotor surrounds and is concentric with said stator (16), said stator (16) and said rotor (46) defining a gap (43) therebetween, the position of said gap (48) defining a diameter (D4), greater than the first diameter (D5) of the mounting hole of the disk.

6. A spin motor assembly according to any one of claims 1 to 5, wherein said first and second bearings are spaced apart by a third portion occupying a third position, between said first and second positions, relative to said axis.

7. A spin motor assembly according to any one of claims 1 to 6, wherein said base plate defines a plane substantially perpendicular to said axis and includes a recessed portion, and said stator is positioned below said plane.

8. A spin motor assembly according to any one of claims 1 to 7, wherein the first portion of said shaft has a first diameter and said second portion of said shaft has a second diameter, said second diameter being less than said first diameter.

9. A spin motor assembly according to any one of claims 6 to 8 being dependent on claim 6, wherein the stator is provided on the top of said base plate and is positioned at a fourth position relative to said shaft non-overlapping said first, second and third positions, wherein said base plate defines a plane substantially perpendicular to said axis and said stator is positioned below said plane.

10. A spin motor assembly according to any one of claims 1 to 9, wherein said rotor comprises a multi-pole magnetic ring provided on said hub and concentric with said stator.

11. A spin motor assembly according to any one of claims 1 to 10, wherein said first and second bearings are preloaded.

12. A spin motor assembly according to claim 1, wherein the rotor is mounted on said hub so that a portion of said rotor is cantilevered with respect to said bearings and concentric with said first portion of said shaft.

## Patentansprüche

1. Spinn-Motoreinheit (9) zum Antreiben einer Platte (40) bei einem Plattenantrieb mit einer Basis (100) und der genannten Platte, die eine Aufnahmebohrung mit einem ersten Durchmesser (D5) aufweist, umfassend:
eine Welle (112) mit einem ersten und einem zweiten Teil (112a, 112b) sowie eine Achse aufweist, wobei der erste Teil (112) der Welle unmittelbar an der Basis (100) montiert ist; ein erstes und ein zweites Lager (126), die jeweils in einer ersten beziehungsweise einer zweiten Position auf dem zweiten Teil (112b) der Welle angeordnet sind;
eine Nabe (134), die drehbar auf der Welle (112) durch das erste und das zweite Lager (126) gelagert ist und die eine zylindrische Lagerkontaktfläche mit einem zweiten Durchmesser (D3, D6) aufweist sowie eine Plattentragfläche, die im wesentlichen senkrecht zur Achse der Welle (112) verläuft, um die Platte zu tragen;
einen Stator (116), der auf der Basis (100) angeordnet ist und der ein Blechpaket mit einem dritten Durchmesser (D4) aufweist, der größer als der zweite Durchmesser (D6) ist;
einen Rotor, der auf der Nabe montiert ist; und
wobei das Massenzentrum der umlaufenden Elemente an einem Punkt auf der Achse der Welle (112) angeordnet ist, der zu der Position des. ersten und des zweiten Lagers (126) äquidistant ist.

2. Spinn-Motoreinheit (9) nach Anspruch 1, wobei der Rotor (146) in bezug auf das erste und auf das zweite Lager cantileverd ist.

3. Spinnmotor (9) nach Anspruch 1 oder 2, wobei das erste und das zweite Lager an einer entsprechenden ersten beziehungsweise zweiten Position angeordnet sind, die nahe beieinander liegen.

4. Spinnmotor (9) nach Anspruch 1, 2 oder 3, wobei die Welle (12) eine Achse aufweist und der Stator an einem Punkt entlang der Achse der Welle (12) außerhalb des Axialbereiches zwischen den Positionen des ersten und des zweiten Lagers (26) angeordnet ist.

5. Spinn-Motoreinheit nach einem der Ansprüche 1 bis 4, wobei der Rotor (46) derart auf der Nabe (34) gelagert ist, daß der Rotor den Stator (16) umgibt und zu diesem konzentrisch ist, wobei Stator (16) und Rotor (46) zwischen sich einen Spalt (43) bilden, dessen Position einen Durchmesser (D4) definiert, der größer als der erste Durchmesser (D5) der Aufnahmebohrung der Platte ist.

6. Spinnmotor nach einem der Ansprüche 1 bis 5, wobei das erste und das zweite Lager durch ein drittes Teil voneinander auf Abstand gehalten werden, das eine dritte Position zwischen der ersten und der zweiten Position relativ zur Achse einnimmt.

7. Spinnmotor nach einem der Ansprüche 1 bis 6, dadurch gekennzeichnet, daß die Basis eine Ebene definiert, die im wesentlichen senkrecht zur Achse verläuft und einen ausgesparten Teil aufweist, und wobei der Stator unterhalb der Ebene liegt.

8. Spinnmotor nach einem der Ansprüche 1 bis 7, wobei der erste Teil der Welle einen ersten Durchmesser, und der zweite Teil der Welle einen zweiten Durchmesser aufweist, und wobei der zweite Durchmesser geringer als der erste Durchmesser ist.

9. Spinnmotor nach einem der Ansprüche 6 bis 8 in Abhängigkeit von Anspruch 6, wobei der Stator auf der Basisplatte und in einer vierten Position relativ zu den die Welle nicht überlappenden ersten, zweiten und dritten Position angeordnet ist, wobei die Basis eine Ebene definiert, die im wesentlichen senkrecht zur Achse verläuft, und der Stator unterhalb der Ebene liegt.

10. Spinnmotor nach einem der Ansprüche 1 bis 9, wobei der Rotor einen mehrpoligen magnetischen Ring umfaßt, der auf der Nabe angeordnet und zum Stator konzentrisch ist.

11. Spinn-Motor-Einheit nach einem der Ansprüche 1 bis 10, wobei das erste und das zweite Lager hervorgespannt sind.

12. Spinn-Motor-Einheit nach Anspruch 1, wobei der Rotor derart auf der Nabe gelagert ist, daß ein Teil des Rotors in bezug auf die Lager cantileverd und zum ersten Teil der Welle konzentrisch ist.

## Revendications

1. Ensemble moteur de rotation (9), destiné à mettre en rotation un disque (40) dans une unité de disques comprenant une plaque de base (100) et ledit disque, le disque ayant un trou de montage d'un premier diamètre (D5), comprenant :
- un arbre (112) ayant une première (112a) et une deuxième (112b) parties et un axe, ladite première partie (112a) dudit arbre étant montée directement sur la plaque de base (100);
- des premier et deuxième paliers (126) prévus respectivement aux première et deuxième extrémités de ladite deuxième partie (112b) dudit arbre;
- un moyeu (134) supporté dans sa rotation sur ledit arbre (112) par lesdits premier et deuxième paliers (126); ledit moyeu ayant une surface de contact de palier cylindrique ayant un deuxième diamètre (D3, D6) et une surface support de disque sensiblement perpendiculaire à l'axe dudit arbre (112), afin de supporter le disque;
- un stator (116), prévu sur la plaque de base (100), ledit stator comprenant un empilage ayant un troisième diamètre (D4) supérieur au deuxième diamètre (D6);
- un rotor, monté sur ledit moyeu; et
- le centre de gravité des éléments tournants étant positionné en un point situé sur l'axe dudit arbre (112), en une position équidistante vis-à-vis des positions desdits premier et deuxième paliers (126).

2. Un ensemble de moteur de rotation (9) selon la revendication 1, dans lequel ledit rotor (146) est monté en porte-à-faux par rapport auxdits premier et deuxième paliers.

3. Un ensemble de moteur de rotation (9) selon la revendication 1 ou 2, dans lequel lesdits premier et deuxième paliers (126) sont prévus respectivement en des première et deuxième positions adjacentes.

4. Un ensemble de moteur de rotation (9) selon la revendication 1, 2 ou 3, dans lequel:
- ledit arbre (12) comporte un axe; et
- ledit stator (16) est positionné en un point le long de l'axe de l'arbre (12) extérieur à la zone axiale située entre les positions desdits premier et deuxième paliers (26).

5. Un ensemble de moteur de rotation (9) selon l'une des quelconque des revendications 1 à 4, dans lequel ledit rotor (46) est monté sur ledit moyeu (34) de manière que ledit rotor entoure et soit concentrique audit stator (16), ledit stator (16) et ledit rotor (46) définissant entre eux un entrefer (48), la position dudit entrefer (48) définissant un diamètre (D4) supérieur au premier diamètre (D5) du trou de montage du disque.

6. Un ensemble de moteur de rotation selon l'une quelconque des revendications 1 à 5, selon lequel lesdits premier et deuxième paliers sont espacés par une troisième partie occupant une troisième position, entre lesdites première et deuxième positions, par rapport audit axe.

7. Un ensemble de moteur de rotation selon l'une quelconque des revendications 1 à 6, selon lequel ladite plaque de base définit un plan sensiblement perpendiculaire audit axe et comprend une partie creusée, et ledit stator est positionné au-dessous dudit plan.

8. Un ensemble de moteur de rotation selon l'une quelconque des revendications 1 à 7, selon lequel la première partie dudit arbre a un premier diamètre et ladite deuxième partie dudit arbre a un deuxième diamètre, ledit deuxième diamètre étant inférieur audit premier diamètre.

9. Un ensemble de moteur de rotation selon l'une quelconque des revendications 6 à 8, dépendant de la revendication 6, dans lequel le stator est prévu en partie haute de ladite plaque de base et est positionné en une quatrième position par rapport audit arbre, sans chevauchement avec lesdites première, deuxième et troisième positions, dans lequel ladite plaque de base définit un plan sensiblement perpendiculaire audit axe et ledit stator étant positionné au-dessous dudit plan.

10. Un ensemble de moteur de rotation selon l'une quelconque des revendications 1 à 9, dans lequel ledit rotor comprend un anneau magnétique multipôle, prévu sur ledit moyeu et placé concentriquement par rapport audit stator.

11. Un ensemble de moteur de rotation selon l'une quelconque des revendications 1 à 10, dans lequel lesdits premier et deuxième paliers sont pré-chargés.

12. Un ensemble de moteur de rotation selon la revendication 1, dans lequel le rotor est monté sur ledit moyeu de manière qu'une partie dudit rotor soit en porte-à-faux par rapport auxdits paliers et concentrique vis-à-vis de ladite première partie dudit arbre.
